# EUROPÄISCHE PATENTSCHRIFT

(11) **EP 0 911 551 B1**
(45) Veröffentlichungstag und Bekanntmachung des Hinweises auf die Patenterteilung: **11.02.2004**
(21) Anmeldenummer: 98117182.0
(22) Anmeldetag: 10.09.1998
(51) Int. Cl.: F16H 61/02

(54) **Verfahren zum Steuern eines Automatikgetriebes eines Kraftfahrzeuges**
Method for controlling a vehicle automatic transmission
Méthode de commande d'une transmission automatique de véhicule automobile

(30) Priorität: 09.10.1997 DE 19744598
(43) Veröffentlichungstag der Anmeldung: 28.04.1999
(73) Patentinhaber: Volkswagen Aktiengesellschaft, 38436 Wolfsburg (DE)
(72) Erfinder: Kruse, Georg, Dipl.-Ing., 38518 Gifhorn (DE); Marx, Volker, 29379 Wittingen (DE); Carl, Frank, 38106 Braunschweig (DE)
(74) Vertreter: Hübsch, Dirk, Dipl.-Ing.

(56) Entgegenhaltungen:
- WO-A-96/28317
- DE-A- 3 201 440
- DE-A- 4 312 717
- FR-A- 2 699 978

## Beschreibung

Die Erfindung betrifft ein Verfahren zum Steuern eines Automatikgetriebes eines Kraftfahrzeuges gemäß dem Oberbegriff des Anspruchs 1.

Aus der DE 37 17 675 C2 ist eine Schalteinrichtung für ein Kraftfahrzeug mit automatischem Getriebe bekannt, mit dessen Wählhebel in einer zweiten Schaltgasse Vorwärtsgänge manuell schrittweise schaltbar sind. Diese Anordnung hat jedoch den Nachteil, daß sich ein Fahrer immer merken muß, in welchem Betriebszustand sich das Automatikgetriebe gerade befindet, im Automatikmodus, bei dem eine Getriebesteuerung automatisch und leistungsoptimiert ("Sport"-Modus") oder verbrauchsoptimiert ("ECO"-Modus") die Gänge schaltet, oder im Manuellmodus, bei dem der Fahrer manuell und schrittweise die Gänge des Getriebes schaltet. Ferner kommt es vor, daß der Fahrer, aus Nachlässigkeit, Vergeßlichkeit oder Bequemlichkeit nicht in den Automatikmodus zurückschaltet und so über eine längere Betriebsphase das Kraftfahrzeuges mit nicht optimalen Parametern bezüglich der Gangwahl des Getriebes betrieben wird.

Weiterhin ist im Stand der Technik ein gattungsbildendes Verfahren zum Steuern eines Automatikgetriebes eines Kraftfahrzeugs bekannt (DE 32 01 440 A1), wobei eine Schaltfunktion wahlweise in einem Automatikbetrieb automatisch oder in einem Manuellbetrieb manuell gesteuert ausgelöst wird, wobei nach Eintritt wenigstens einer vorbestimmten Bedingung automatisch vom Manuellbetrieb in den Automatikbetrieb gewechselt wird. Bei dem hier beschriebenen Verfahren ist eine sogenannte "Vorrangumschaltung" realisiert, die erst bei normaler Fahrt bewirkt wird. Hierbei wird insbesondere bei Beschleunigungs- oder Motorbremsvorgängen das manuelle Programm festgehaltenlgespeichert. Unter diesen Bedingungen ist der Wechsel aus dem manuellen Schaltmodus in den Automatikmodus aber noch nicht optimal, da bei bestimmten Bedingungen eben nicht in den Automatikmodus geschaltet wird, was nachteilig sein kann.

Der vorliegenden Erfindung liegt daher die Aufgabe zugrunde, ein Verfahren der oben genannten Art zur Verfügung zu stellen, wobei die oben genannten Nachteile überwunden werden.

Diese Aufgabe wird erfindungsgemäß durch ein Verfahren der oben genannten Art mit den Merkmalen des Anspruchs 1 gelöst. Vorteilhafte Ausgestaltung der Erfindung sind in den abhängigen Ansprüchen angegeben.

Dazu ist vorgesehen, daß nach einem manuell ausgelösten Schaltvorgang nach Eintritt wenigstens einer vorbestimmten Bedingung automatisch vom Manuellbetrieb in den Automatikbetrieb gewechselt wird.

Dies hat den Vorteil, daß automatisch und ohne zusätzliche manuelle Betätigung durch den Fahrer in den diesen entlastenden Automatikbetrieb zurückgeschaltet wird. Der Fahrer kann sich ganz auf den Verkehr konzentrieren und muß nicht seine Aufmerksamkeit vom Verkehrsgeschehen abwenden, um vom Manuellbetrieb zurück in den Automatikbetrieb zu schalten.

Zweckmäßigerweise wird dabei beim Wechsel in den Automatikbetrieb, dieser mit dem zuletzt eingestellten Modus, beispielsweise in einem "ECO"-Mode oder einem "Sport"-Mode fortgeführt. Damit erhält der Fahrer automatisch die zuletzt vor dem Beginn seiner manuellen Betätigung herrschenden Betriebsbedingungen bzgl. der Getriebesteuerung zurück.

Alternativ dazu wird im Manuellbetrieb die Anzahl der manuell ausgelösten Schaltvorgänge, insbesondere innerhalb eines vorbestimmten Zeitintervalls, bestimmt und nach einer vorbestimmten Anzahl von Schaltvorgängen von einem "ECO"-Mode in einen "Sport"-Mode gewechselt. Dies hat den Vorteil, daß durch die Überwachung der manuellen Schaltvorgänge ein Verkehrsgeschehen oder ein Fahrerwunsch erkennt wird, welches bzw. welcher eine leistungsoptimierte Getriebesteuerung erfordert.

Eine Lenkradbetätigung signalisiert einen erhöhten Aufmerksamkeitsbedarf durch den Fahrer, beispielsweise für Kurvenfahrten oder Ausweichmanöver. Dementsprechend ist es besonders vorteilhaft, daß die vorbestimmte Bedingung eine Lenkradbetätigung seit dem letzten manuellen Schaltvorgang ist.

Zweckmäßigerweise ist die vorbestimmte Bedingung eine Blinkerbetätigung seit dem letzten manuellen Schaltvorgang. Dies erzielt eine automatische Entlastung des Fahrers vom Gangschalten in Situationen, wie beispielsweise Überholvorgängen oder beim Abbiegen, wo wiederum die ganze Aufmerksamkeit des Fahrers auf das Verkehrsgeschehen gerichtet sein soll, statt auf das Schalten von Gängen des Getriebes. Dieses übernimmt dann erfindungsgemäß völlig automatisch wieder die Getriebesteuerung.

Weitere Merkmale, Vorteile und vorteilhafte Ausgestaltungen der Erfindung ergeben sich aus den abhängigen Ansprüchen, sowie aus der nachstehenden Beschreibung der Erfindung.

Ein Wählhebel eines Automatikgetriebes mit wahlweiser manueller oder automatischer Gangschaltung umfaßt eine automatischen Schaltgasse mit den Stellungen P, R, N, D und ggf. Hochschaltbegrenzungs-Automatikstufen 2 und 3 und eine manuelle Schaltgasse mit einer neutralen Mittelstellung des Wählhebel und zwei Stellungen "+" und "-" zum manuellen schrittweisen Hochschalten ("+") oder Runterschalten ("-") von Gängen des Automatikgetriebes.

Wenn der Fahrer in der automatischen Schaltstufe "D" fährt und eine Verkehrssituation sieht, die beispielsweise ein Fahren in einem andern Gang wünschenswert erscheinen läßt oder ggf. notwendig macht, kann der Fahrer durch "+"/"-" - Tip-Betätigungen einen anderen Gang manuell und schrittweise wählen. Eine derartige Verkehrssituation kann beispielsweise ein Überholvorgang, ein schnelles Verlassen eines Kreuzungs- oder Gefahrenbereiches oder eine Bergfahrt mit einem Anhänger sein.

Der manuell vom Fahrer gewählte Gang wird nun erfindungsgemäß so lange im D-Mode gehalten, bis eine weitere Fahrzeug- oder Fahreraktivität, wie beispielsweise eine Lenkradbetätigung oder eine Blinkerbetätigung erfolgt. Dies veranlaßt die Getriebesteuerung in den normalen D-Mode mit automatischer Getriebebetätigung zurück zu gehen.

Die Rücksprungbedingung in den Automatikbetrieb kann auch eine Kombination mehrerer derartiger Bedingungen zur gleichen Zeit oder innerhalb einer vorbestimmten Zeitspanne sein, beispielsweise Lenkrad- und/oder Blinkerbetätigung.

Nur beispielhaft wurde ein Betriebswechsel zwischen D-Mode und manueller Tip-Betätigung beschrieben. Erfindungsgemäß kann auch ein Wechsel zwischen jeder Schaltstufe des Wählhebels zum Vorwärtsfahren, also D, 2, 3 und einer manuellen Getriebebetätigung erfolgen.

In einer bevorzugten Weiterbildung der Erfindung wertet die Getriebesteuerung die manuellen "+"/"-" - Aktivitäten des Fahrers aus und wechselt automatisch von einem "ECO"-Mode in einen "Sport"-Mode nach beispielsweise einer vorbestimmten Zahl von manuellen Gangwechseln in einer vorbestimmten Zeit. Ein anschließender Automatikbetrieb erfolgt dann erfindungsgemäß in dem "Sport"-Mode, statt dem ggf. ursprünglichen "ECO"-Mode, welcher ggf. zum Zeitpunkt des Wechsel von automatischer zu manueller Getriebebetätigung aktiv war.

## Patentansprüche

1. Verfahren zum Steuern eines Automatikgetriebes eines Kraftfahrzeuges, wobei eine Schaltfunktion wahlweise in einem Automatikbetrieb automatisch oder in einem Manuellbetrieb manuell gesteuert ausgelöst wird, wobei nach Eintritt wenigstens einer vorbestimmten Bedingung automatisch vom Manuellbetrieb in den Automatikbetrieb gewechselt wird, **dadurch gekennzeichnet, daß** die vorbestimmte Bedingung eine Lenkradbetätigung seit dem letzten manuellen Schaltvorgang und/oder eine Blinkerbetätigung seit dem letzten manuellen Schaltvorgang ist.

2. Verfahren nach Anspruch 1,
**dadurch gekennzeichnet, daß**
beim Wechsel in den Automatikbetrieb, dieser mit dem zuletzt eingestellten Modus, beispielsweise in einem "ECO"-Mode oder einem "Sport"-Mode fortgeführt wird.

3. Verfahren nach Anspruch 1,
**dadurch gekennzeichnet, daß**
im Manuellbetrieb die Anzahl der manuell ausgelösten Schaltvorgänge, insbesondere innerhalb eines vorbestimmten Zeitintervalls, bestimmt wird und nach einer vorbestimmten Anzahl von Schaltvorgängen von einem "ECO"-Mode in einen "Sport"-Mode gewechselt wird.

## Claims

1. Method for controlling an automatic transmission of a motor vehicle, a shift function being selectively triggered by automatic control in automatic operation or by manual control in manual operation, a change from manual operation to automatic operation being made automatically after the occurrence of at least one predetermined condition, **characterized in that** the predetermined condition is a steering-wheel actuation since the last manual shift action and/or a direction-indicator actuation since the last manual shift action.

2. Method according to Claim 1, **characterized in that**, in a change to automatic operation, the latter is pursued with the mode last set, for example an "ECO" mode or a "sporty" mode.

3. Method according to Claim 1, **characterized in that**, in manual operation, the number of manually triggered shift actions, particularly within a predetermined time interval, is determined, and, after a predetermined number of shift actions, a change is made from an "ECO" mode to a "sporty" mode.

## Revendications

1. Procédé de commande d'une transmission automatique d'un véhicule automobile, dans lequel une fonction de changement de vitesse est déclenchée automatiquement en mode automatique ou manuellement en mode manuel, le mode manuel passant automatiquement au mode automatique après l'introduction d'au moins une condition prédéterminée, **caractérisé en ce que** la condition prédéterminée est un actionnement du volant depuis la dernière opération de changement de vitesse manuelle et/ou un actionnement du clignotant. depuis la dernière opération de changement de vitesse manuelle.

2. Procédé selon la revendication 1,
**caractérisé en ce que**
lors du passage au mode automatique, celui-ci se poursuit avec le dernier mode ajusté, par exemple dans un mode "ECO" ou dans un mode "Sport".

3. Procédé selon la revendication 1,
**caractérisé en ce que**
lors du mode manuel, le nombre des opérations de changement de vitesse déclenchées manuellement, notamment en l'espace d'un intervalle de temps prédéterminé, est déterminé, et après un nombre prédéterminé d'opérations de changement de vitesse, le mode "ECO" passe au mode "Sport".
